# EUROPEAN PATENT APPLICATION

(11) **EP 4 782 121 A1**
(43) Date of publication of application: **29.07.2026**
(21) Application number: 25720229.1
(22) Date of filing: 17.03.2025
(51) Int. Cl.: B21D 43/10, B21D 43/18, B21D 7/04, B25J 9/16

(54) **BENDING APPARATUS AND CONTROL METHOD THEREFOR**

(30) Priority: 01.11.2024 KR 20240153672
(71) Applicant: Nicemach Co., Ltd., Dalseong-gun, Daegu 42921 (KR)
(72) Inventor: KIM, Huan Tak, Dalseong-gun, Daegu 42921 (KR)
(74) Representative: Isarpatent
(86) International application number: PCT/KR2025/003419
(87) International publication number: WO 2026/095225

(57) **Abstract**

According to an embodiment of the present disclosure, there is provided a bending machine for bending a workpiece, the bending machine comprise a base, a chuck unit provided on the base and configured to fix the position of the workpiece during processing, a bending unit comprising an articulated robot provided on the base, configured to perform bending of the workpiece from both sides of the chuck unit and to be movable along a longitudinal direction of the base and a support unit comprising an articulated robot provided on the base, configured to be movable along the longitudinal direction of the base and to support the workpiece, wherein the support unit is positioned farther in the longitudinal direction of the base than the bending unit with respect to the chuck unit, and maintains a state of supporting an end side of the workpiece while the bending unit performs bending of the workpiece.

## Description

### TECHNICAL FIELD

The present disclosure relates to a bending machine and a control method thereof.

### BACKGROUND ART

In general, a bending machine is a device for automatically bending wires, rods, or other workpieces to form mechanical components or parts. Bending machine allows flexible adjustment of the bending angle and direction, thereby enabling the efficient formation of even three-dimensional parts.

Patent Document 1(JP 6619560) discloses a double-head bending machine equipped with a plurality of robots that perform bending operations. A notable feature of Patent Document 1 is that both the bending robot and the chuck for securing the workpiece are configured to be movable along a track system. However, since the chuck is responsible for fixing the workpiece, enabling its movement may facilitate material feeding and discharge, but does not necessarily contribute to enhancing the machining quality of the workpiece.

Patent Document 2(EP 1955789) discloses a double-head bending machine employing a relatively simple bending robot structure. Although this document introduces the inclusion of an auxiliary gripper (or holding member) to support precise machining, the gripper is positioned between the chuck and the bending unit. As a result, it not only grips only the straight portion of the workpiece but also creates a limitation in machining areas near the chuck due to its obstructive positioning.

Accordingly, there is a growing demand for a bending apparatus that can perform efficient bending operations regardless of the length of the workpiece, while simultaneously reducing the manufacturing cost.

### DISCLOSURE

### Technical Problems

According to an embodiment of the present disclosure, it is an object to provide a bending apparatus capable of performing bending operations smoothly regardless of the length of the workpiece.

It is another object to provide a bending apparatus that improves the quality of the bent product by preventing deflection of the workpiece during the bending process.

It is yet another object to provide a bending apparatus that is cost-effective to manufacture, thereby improving commercial viability.

The problems to be solved by the embodiment of the present disclosure are not limited to the above-mentioned objects.

### Technical Solutions

According to an embodiment of the present disclosure, there is provided a bending machine for bending a workpiece, comprising a base, a chuck unit provided on the base and configured to fix the position of the workpiece during processing, a bending unit comprising an articulated robot provided on the base, configured to perform bending of the workpiece from both sides of the chuck unit and configured to be movable along a longitudinal direction of the base and a finger unit comprising an articulated robot provided on the base, configured to be movable along the longitudinal direction of the base and to support the workpiece, wherein the finger unit is configured to move to a processed portion of the workpiece and support the workpiece when a predetermined length of the workpiece has been processed.

In addition, the finger unit is configured to be positioned at an unprocessed portion of the workpiece to support the workpiece when the workpiece has not yet been processed to a predetermined length.

In addition, the finger unit is configured to be movable in both a circumferential direction and a longitudinal direction of the workpiece when the workpiece has not yet been processed to a predetermined length,and to be movable only in the circumferential direction after the predetermined length has been processed.

In addition, the finger unit is configured to continuously support the workpiece until the processing of the workpiece is completed.

In addition, the chuck unit is disposed at a center of the base, the bending units are respectively provided at one end and the other end of the base, and the finger units are respectively provided at one end and the other end of the base.

In addition, the base comprises a bending unit guide configured to allow the bending unit to move in a longitudinal direction of the base, and a finger unit guide configured to allow the finger unit to move in the longitudinal direction of the base, wherein the bending unit guide is provided to be longer than the finger unit guide.

In addition, the number of rotational axes of the finger unit is equal to or greater than the number of rotational axes of the bending unit.

In addition, the finger unit comprises a first workpiece support portion configured to support the workpiece in both a circumferential direction and a longitudinal direction and a second workpiece support portion configured to support the workpiece only in the circumferential direction after a predetermined length of the workpiece has been processed, wherein, when the workpiece is being processed, the first workpiece support portion is positioned between the bending unit and the chuck unit and when the processing reaches the predetermined length, the chuck unit, the bending unit, and the second workpiece support portion are sequentially aligned in that order.

In addition, the first workpiece support portion comprises a plurality of first rollers provided on a pair of grippers rotatably mounted at one end of the finger unit, wherein each of the first rollers is formed in a shape such that its cross-sectional area decreases toward the center and when the grippers are rotated to close, the workpiece is positioned and supported at the center side of the first rollers.

In addition, the second workpiece support portion comprises a plurality of second rollers respectively provided on one side and the other side of the pair of grippers rotatably mounted at one end of the finger unit wherein the second rollers are arranged in an alternating pattern to support the workpiece.

### Advantageous Effects

According to the embodiment of the present disclosure, the bending apparatus can efficiently perform bending operations regardless of the length of the workpiece.

In addition, the bending apparatus can enhance the quality of the bending process by preventing deflection of the workpiece.

Furthermore, the structure of the bending unit can be simplified, thereby reducing manufacturing costs.

### Description of Drawings

The accompanying drawings illustrate embodiments of the present disclosure and together with the description serve to explain the principle of the present disclosure.
FIG. 1 is a perspective view of a bending machine according to an embodiment of the present disclosure.
FIG. 2 is a diagram showing a bending unit of the bending machine according to an embodiment.
FIG. 3 is a diagram showing a finger unit of the bending machine according to an embodiment.
FIG. 4 is a diagram showing a finger mechanism of the bending machine according to an embodiment.
FIG. 5 is a perspective view of a bending machine according to another embodiment.
FIGS. 6 to 10 are diagrams illustrating the operation of the bending machine according to an embodiment.

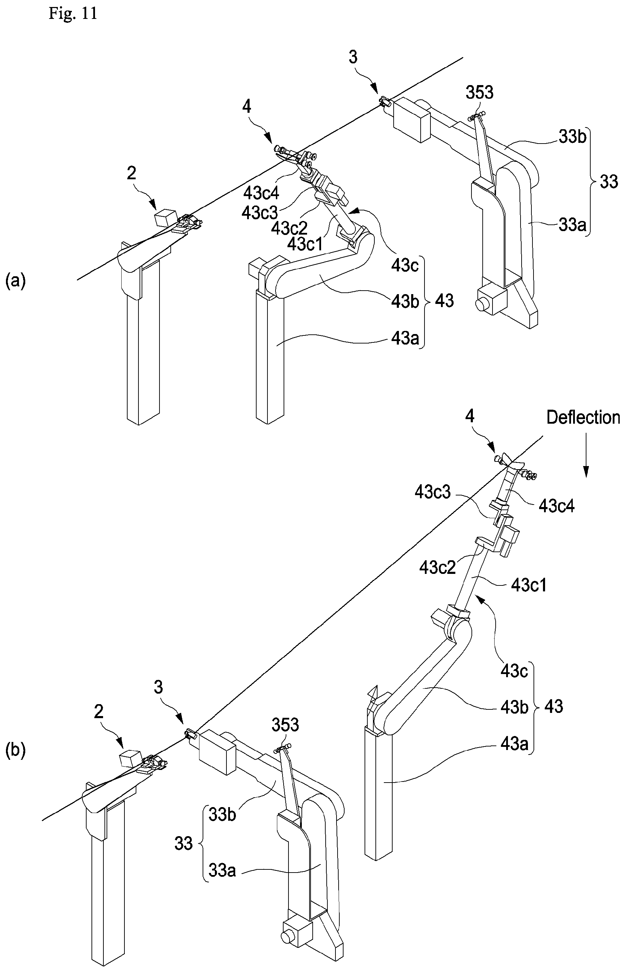

FIG. 11 is a simplified diagram showing the operation of the finger unit according to an embodiment.

### MODE FOR DISCLOSURE

Hereinafter, specific embodiments of the present invention will be described in detail with reference to the accompanying drawings. The following detailed description is provided to facilitate a comprehensive understanding of the methods, apparatuses, and/or systems described in this specification. However, it is merely illustrative and is not intended to limit the scope of the present invention.

In describing the embodiments of the present invention, detailed descriptions of related known technologies may be omitted if they are deemed to obscure the essence of the invention unnecessarily. Furthermore, the terms used hereinafter are defined in consideration of the functions of the invention, and their meanings may vary depending on the user's or operator's intentions or customary usage. Therefore, the definitions should be interpreted based on the overall content of this specification.

The terminology used in the detailed description is intended solely to describe particular embodiments and should not be construed as limiting. Unless clearly stated otherwise, singular forms include plural meanings. As used herein, terms such as "include" or "comprise" are intended to indicate the presence of stated features, integers, steps, operations, elements, or components, but do not preclude the presence or addition of one or more other features, integers, steps, operations, elements, or components.

In addition, terms such as "first," "second," and the like may be used for purposes of distinction, clarification, or convenience in description. For example, such terms may be used to distinguish identical functions based on positional or structural differences. Therefore, the use of such ordinal terms may be omitted where not necessary.

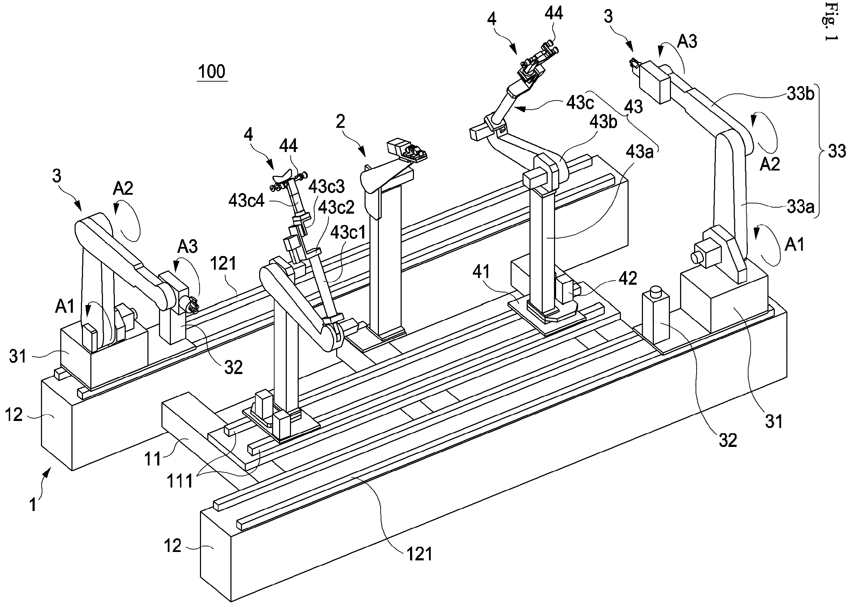

FIG. 1 illustrates a bending machine 100 according to an embodiment of the present disclosure. Referring to FIG. 1, the bending machine 100 according to the present embodiment comprises a base 1, a chuck unit 2, a bending unit 3, and a finger unit 4.

FIG. 1 illustrates a bending machine 100 according to an embodiment of the present disclosure.

Referring to FIG. 1, the bending machine 100 according to an embodiment of the present disclosure comprises a base 1, a chuck unit 2, a bending unit 3, and a finger unit 4.

The bending machine 100 according to an embodiment of the present disclosure may be configured to bend a workpiece continuously or intermittently. The workpiece may comprise wire, bar material, or elongated materials having non-circular cross-sections. Any material or shape may be used as long as it can be bent by the bending unit 3 described below.

The base 1 may provide a space where the equipment described below are mounted or movable. The base 1 may be provided in a shape that is symmetrical on both sides from the center in the width direction.

The base may comprise a first base 11 provided at the center in the width direction and second bases 12 provided on both sides of the first base 11. The second base 12 may be provided higher than the first base 11 with respect to the ground.

The base 1 may comprise a bending unit guide 121 provided so that the bending unit 3 can move. The bending unit guide 121 may be provided in pairs on the upper surface of the second base 12. This may be for stably supporting the bending unit 3.

The bending unit guide 121 is sufficient if it can move the bending unit 3 in the longitudinal direction of the base 1, and there is no limitation on the shape or type of the guide. For example, the bending unit guide 121 may be implemented as an LM guide or a rack-and-pinion mechanism.

The bending unit guide 121 may be provided on the upper surface of the base 1. Specifically, it may be provided on the upper surface of the second base 12. More specifically, since the second base 12 is located on both sides of the first base 11, the bending unit guide 121 may also be provided on both sides in the width direction of the base 1.

The base 1 may comprise a finger unit guide 111 provided so that the finger unit 4 can move along the longitudinal direction of the base 1. The finger unit guide 111 may be provided in pairs on the upper surface of the first base 11. This may be for stably supporting the finger unit 4.

The finger unit guide 111 is sufficient if it allows the finger unit 4 to move along the longitudinal direction of the base 1, and there is no limitation on the shape or type of the guide. For example, the finger unit guide 111 may be implemented as an LM guide or a rack-and-pinion mechanism.

The finger unit guide 111 may be provided on the upper surface of the base 1. Specifically, it may be provided on the upper surface of the first base 11.

The finger unit guide 111 may have one or more finger units 4. Specifically, the number of finger units 4 provided on the finger unit guide 111 may be equal to the number of bending units 3. That is, one or more finger units 4 may be movable along the longitudinal direction of the base 1 along the finger unit guide 111.

The finger unit guide 111 may be shorter than the bending unit guide 121. In this case, the finger unit 4 may be implemented as a robot having a number of rotational axes equal to or greater than that of the bending unit 3. This will be described later.

Additionally, the finger unit guide 111 and the bending unit guide 121 may be provided in parallel. Thus, the finger unit 4 and the bending unit 3 can move along the longitudinal direction of the base 1 without interfering with each other.

The bending unit guide 121 may be longer than the finger unit guide 111. That is, the finger unit 4 has a shorter movable range compared to the bending unit 3, but it can smoothly perform the bending operation in accordance with the embodiment of the present disclosure. Detailed descriptions will be provided later.

The chuck unit 2 may fix the workpiece. The chuck unit 2 may fix the position of the workpiece during the bending operation. Thus, while the bending unit 3 performs the bending operation, the workpiece is maintained in a fixed position, thereby improving the processing efficiency and quality.

The chuck unit 2 may be provided on the base 1. Specifically, the chuck unit 2 may be provided on the first base 11 of the base 1. The chuck unit 2 may be located at the center in the width direction of the base 1. The chuck unit 2 may also be located at the center in the longitudinal direction of the base 1. More specifically, the chuck unit 2 may be positioned on the first base 11. At this time, the chuck unit 2 may be located outside the finger unit guide 111. Thus, bending operations may be independently performed at the front and rear in the longitudinal direction of the base, based on the chuck unit 2.

The chuck unit 2 may be extended upward from the upper surface of the first base 11 with respect to the ground. The length of the extension of the chuck unit 2 may be determined considering that the bending unit 3 and the finger unit 4 are configured as articulated robots, the interference of components during the bending operation, and the need to allow free movement in any direction during the bending operation.

The bending unit 3 may be configured to bend the workpiece. When a workpiece is supplied, the bending unit 3 performs a bending operation using a bending head. The bending unit 3 may perform the bending operation while moving from the end of the workpiece toward the chuck unit 2.

The bending unit 3 may be implemented as an articulated robot. The articulated robot refers to a robot having multiple rotational axes, such as a 3-axis or 6-axis robot arm.

The bending unit 3 may be provided on the base 1. The bending unit 3 may be provided on the second base 12. The bending unit 3 may be provided movably along the longitudinal direction of the base 1 on the bending unit guide 121 located on the upper surface of the second base 12.

Multiple bending units 3 may be provided. When multiple bending units 3 are provided, they may be arranged in pairs on both sides of the base 1. Accordingly, the chuck unit 2 is positioned near the center of the base 1, and the bending units 3 are positioned on both second bases 12, enabling bending to be performed independently on both sides relative to the chuck unit 2.

The following description assumes that two bending units 3 are provided. However, the invention is not limited to this and is applicable as long as a plurality of bending units 3 are provided. Also, the bending units 3 may have the same configuration. The bending unit 3 on one side of the base 1 may be referred to as the first bending unit 3, and the other as the second bending unit 3. For convenience, only one bending unit 3 will be described. Since the second bending unit 3 is configured the same as the first bending unit 3, description of the second bending unit 3 is omitted.

The bending unit 3 may comprise a bending unit base 31, a bending unit motor 32, a bending robot arm 33, and a bending head 34.

The bending unit base 31 may be connected to the bending unit guide 121 and may support the bending unit 3. The bending unit base 31 may provide space for mounting the bending robot arm 33 and the bending unit motor 32.

The bending unit motor 32 provides power to move the bending unit 3 by moving the bending part base 31 in the bending part guide 121.

The bending robot arm 33 may be configured as an articulated robot. The bending head 34, described below, is mounted to the bending robot arm 33.

The bending robot arm 33 may be equipped with a robot arm having three axes of rotation. The bending robot arm 33 may also be equipped with a robot arm having six axes of rotation. However, since each motor is required to operate independently for each axis of rotation, if the bending robot arm 33 is used in a form in which six axes of rotation are used, this may cause an increase in the manufacturing cost. However, in both cases where the bending robot arm 33 is equipped with a three-axis robot arm and a six-axis robot arm, the bending operation according to one embodiment of the present disclosure can be smoothly performed.

The bending head 34 may be a head for performing the bending operation. There is no limitation on the structure of the bending head.

The bending head 34 may be rotatably mounted at the end of the bending robot arm 33.

The bending head 34 may be provided at the end of the bending robot arm 33. Thus, the bending head 34 may be moved to the position where the workpiece is located.

The bending unit 3 can perform bending by operating at a required position from an end of the workpiece when chuck unit 2 fixes the position of the workpiece. The bending unit 3 can perform bending work by moving toward the chuck unit 2.

The finger unit 4 may be implemented as an articulated robot provided on the base 1. As described above, the finger unit 4 may be implemented as a 3-axis or 6-axis robot arm. The finger unit 4 may support the workpiece. Specifically, the finger unit 4 may serve to prevent sagging at the end of the workpiece.

The finger unit 4 may be configured to move along the longitudinal direction of the base 1. As described later, the finger unit 4 may comprise a first finger unit and a second finger unit. However, since the finger units are provided in the same form, the explanation is based on one finger unit 4. The first and second finger units 4 may be mounted on the finger unit guide 111 and be movable along the longitudinal direction of the base 1.

The finger unit 4 may assist the operation of the bending unit 3.

The finger unit 4 may assist the bending unit 3 from the start of the operation until the completion of the bending process. Further details will be described later.

The finger unit 4 may comprise a first finger unit for assisting the operation of the first bending unit 3 and a second finger unit for assisting the operation of the second bending unit 3. The number of finger units 4 may match the number of bending units 3. However, as mentioned above, the explanation is based on a single finger unit.

The finger unit 4 may comprise a finger base 41, a finger unit motor 42, a finger robot arm 43, and a finger unit head 44.

The finger base 41 may be connected to the finger unit guide 111 and may enable the finger unit 4 to move in the longitudinal direction of the base 1.

The finger base 41 may provide space for the installation of the finger unit motor 42 and the finger robot arm 43.

The finger unit motor 42 may provide power for the finger unit 4 to move along the longitudinal direction of the base 1.

The finger robot arm 43 may be configured as an articulated robot.

Preferably, the finger robot arm 43 may be implemented as a six-axis articulated robot. This is because the finger robot arm 43 needs to support the end of the workpiece once the bending process reaches a certain length and should be able to position itself at various points as the bending proceeds. However, if a three-axis articulated robot can sufficiently perform the support function in repeated bending operations, it may also be used.

The finger unit head 44 may be positioned at one end of the finger robot arm 43. The finger unit head 44 may comprise a gripper 440, a first workpiece support portion 441, and a second workpiece support portion 442.

Further details will be described later.

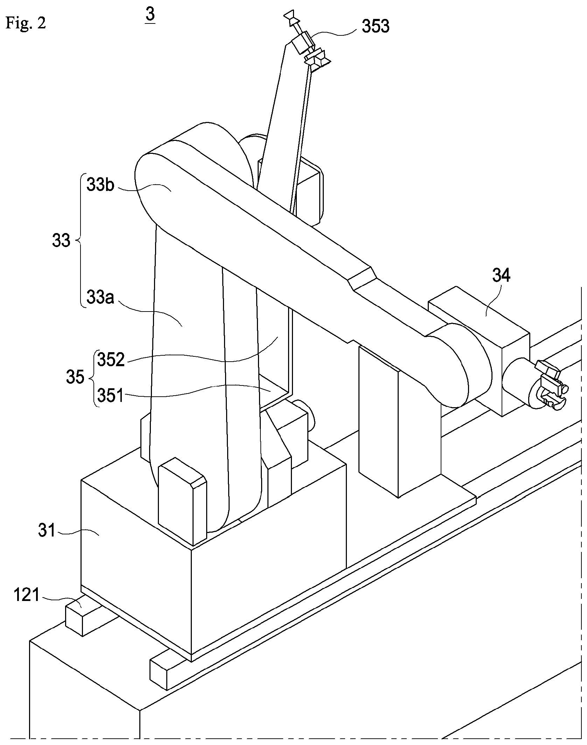

FIG. 2 illustrates the bending unit 3.

Referring to FIG. 2, the bending unit 3 is provided on the base 1 and is configured to be movable along the longitudinal direction of the base 1. The bending unit 3 performs a bending operation on the workpiece.

The bending robot arm 33 of the bending unit 3 may have three rotational axes (A1, A2, A3). However, as described above, it may also have six rotational axes and still perform the operation smoothly. The bending unit 3 may be configured such that the three rotational axes operate independently.

The bending robot arm 33 may comprise a first bar 33a and a second bar 33b. The first bar 33a may extend in the height direction of the base 1 from the bending unit base 31. The second bar 33b may be provided at the end of the first bar 33a and may be rotatably connected to the first bar 33a. A bending head 34 may be rotatably provided at one end of the second bar 33b.

The bending unit 3 may include an auxiliary finger unit 35. The auxiliary finger unit 35 may comprise a first extension portion 351, a second extension portion 352, and an auxiliary finger head 353.

The first extension portion 351 may be coupled to the bending robot arm 33 and extend in the longitudinal direction of the base 1. The distance between the auxiliary finger unit 35 and the bending head 34 may be determined based on the length of the first extension portion 351.

The first extension portion 351 may extend from the bending robot arm 33 toward the chuck unit 2. Accordingly, the bending units 3 on both sides may each extend toward the chuck unit 2 and support the workpiece. Therefore, the auxiliary finger unit 35 supports the unprocessed portion of the workpiece.

The second extension portion 352 may be a portion extending in the height direction of the base 1 from the first extension portion 351. The first extension portion 351 and the second extension portion 352 may be integrally formed.

The auxiliary finger head 353 may be provided at the end of the second extension portion 352 and may be rotatably mounted. The auxiliary finger head 353 may be configured in the same manner as the first workpiece support portion 441 described below.

For example, the auxiliary finger head 353 may comprise three rollers, and each roller may have a smaller cross-sectional area toward its center. Thus, the workpiece may be seated at the center of each roller.

The rollers may be arranged in sequence based on the seated position of the workpiece. That is, the auxiliary finger head 353 may be configured such that two rollers are provided on one side and one roller is provided on the other side.

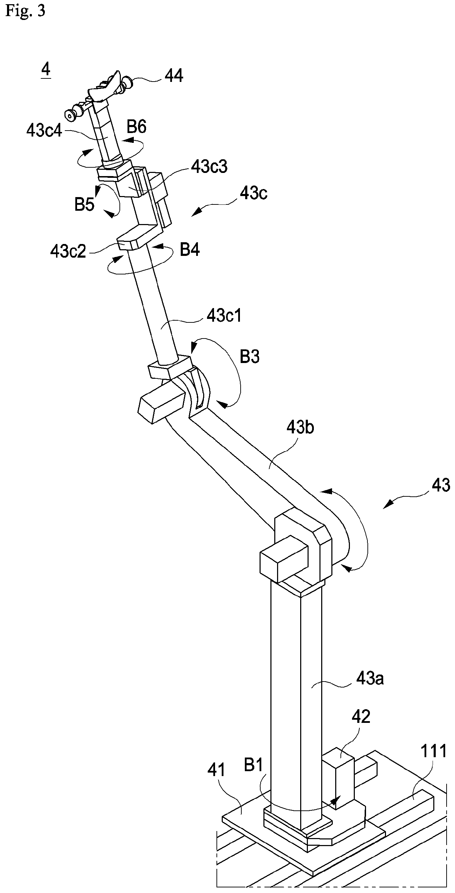

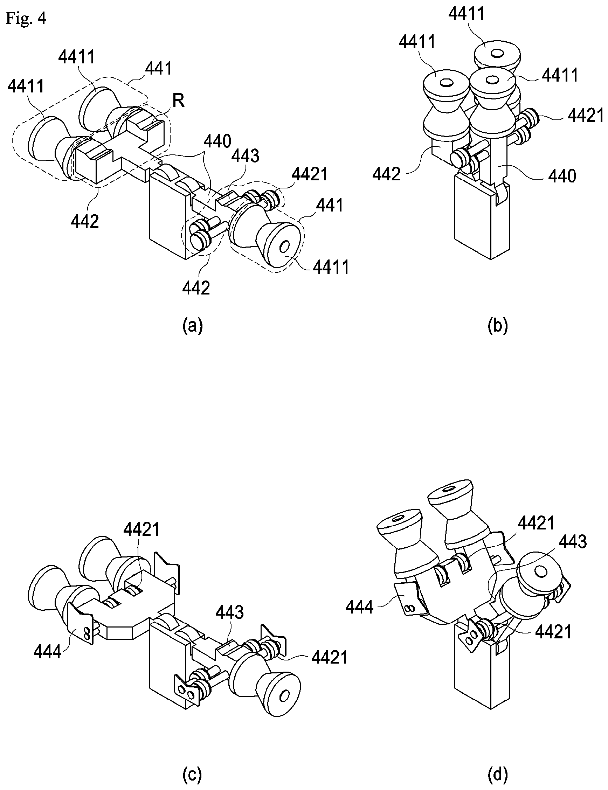

FIG. 3 illustrates a finger unit, and FIG. 4 illustrates various embodiments of the finger unit.

The finger robot arm 43 may be an articulated robot having six rotational axes (B1, B2, B3, B4, B5, B6).

As described above, it may be configured to move along the longitudinal direction of the base 1 and support the workpiece.

The finger robot arm 43 may be configured such that the six rotational axes operate independently.

The finger robot arm 43 may be located on the finger base 41. Specifically, a first bar 43a may be located on the finger base 41 and may be rotatable with respect to the finger base 41.

A second bar 43b may be provided at the end of the first bar 43a. Specifically, the second bar 43b may be rotatably connected to the first bar 43a.

A third bar 43c may be provided at the end of the second bar 43b. Specifically, the third bar 43c may be rotatably connected to the second bar 43b.

The third bar 43c may comprise a first portion 43c1 rotatably connected to and extending from the second bar 43b, a second portion 43c2 rotatably connected to the first portion 43c1, a third portion 43c3 rotatably connected to the second portion 43c2, and a fourth portion 43c4 rotatably connected to the third portion 43c3.

In other words, the finger unit 4 may comprise a rotational axis B1 between the first bar 43a and the finger base 41, a rotational axis B2 between the first bar 43a and the second bar 43b, a rotational axis B3 between the second bar 43b and the third bar 43c, a rotational axis B4 between the first portion 43c1 and the second portion 43c2, a rotational axis B5 between the second portion 43c2 and the third portion 43c3, and a rotational axis B6 between the third portion 43c3 and the fourth portion 43c4.

FIGS. 4(a) and 4(b) illustrate a first embodiment of the finger unit head, and FIGS. 4(c) and 4(d) illustrate a second embodiment of the finger unit head.

The finger unit head 44 may comprise a first workpiece support portion 441 and a second workpiece support portion 442.

The first workpiece support portion 441 may be configured to allow insertion of the workpiece and rotation in the circumferential direction. The second workpiece support portion 442 may be configured to allow only circumferential rotation of the workpiece.

The finger unit head 44 may comprise a gripper 440 rotatably mounted to one end of the finger unit 4. The first and second workpiece support portions 441 and 442 may be provided on the gripper 440.

The first workpiece support portion 441 may be provided at the ends of both sides of the gripper 440. The first workpiece support portion may comprise a combination of first rollers 4411.

The first roller 4411 may be provided in a cylindrical shape having a smaller cross-sectional area toward the center to allow the workpiece to be seated. In other words, the rollers may have an hourglass shape.

Accordingly, when the gripper 440 is rotated to close, the workpiece may be seated and supported at the center of the first rollers 4411.

At this time, the workpiece may be inserted without being compressed. The finger unit head 44 may have two first rollers 4411 on one side and one first roller 4411 on the other side.

Referring to FIGS. 4(a) and 4(b), second rollers 4421 may be provided on one side. Each second roller 4421 may be arranged in an alternating pattern such that the workpiece is supported in the interleaved space. A recess may be provided on the opposite side, and when the gripper 440 closes, the workpiece may be seated between the recess and the second roller 4421.The recess may function to guide the workpiece and allow the workpiece to be supported regardless of its diameter.

In other words, the second rollers 4421 may be arranged on both widthwise sides of the gripper 440. On one side, the second rollers 4421 may be arranged on different axes so that a portion of the second rollers 4421 overlaps. The workpiece may be seated outside the overlapping portion of the second rollers 4421. Accordingly, even if the cross-sectional size of the workpiece increases, the workpiece may not be displaced from the proper position.

Referring to FIGS. 4(c) and 4(d), the second rollers 4421 may also be provided on the opposite side. In this case as well, the workpiece may be seated and supported in the portion where the second rollers 4421 are arranged in an alternating pattern.

Additionally, the second workpiece support portion 442 may include a first guide 443 provided on the gripper 440 and a second guide 444 provided outside the second roller 4421.

The first guide 443 and the second guide 444 may be configured to guide the workpiece toward the second workpiece support portion 442 when the gripper 440 is closed, even if the workpiece is not perfectly aligned. Specifically, they may be provided as recesses formed to be concave toward the center.

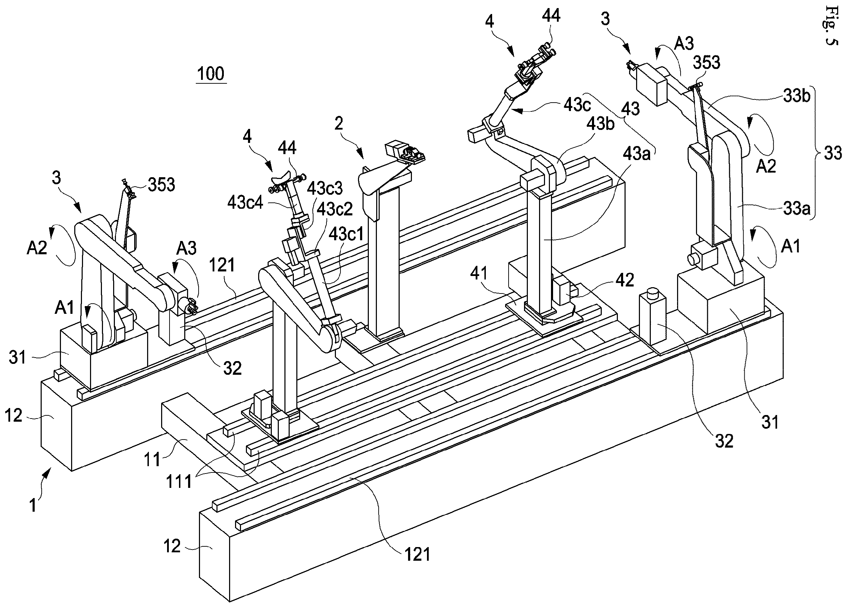

FIG. 5 is a perspective view of the bending machine according to an embodiment of the present disclosure.

FIG. 5 illustrates a form in which the auxiliary finger unit 35 is applied. Since this has been described with reference to FIGS. 1 and 2, a detailed description will be omitted.

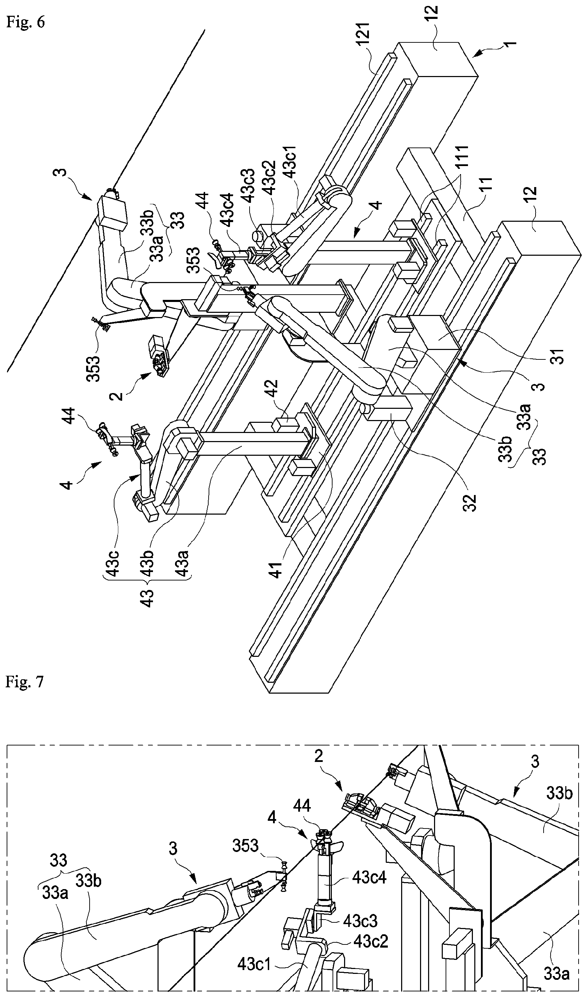

FIGS. 6 to 10 are operational diagrams of the bending machine according to an embodiment of the present disclosure.

FIG. 6 illustrates feeding of a workpiece. The bending unit 3 may bring the workpiece into the bending machine 100 from the outside of the bending machine 100.

Referring to FIG. 7, when the chuck unit 2 grips the workpiece, the finger unit 4 operates to prevent the workpiece from deviating from the correct position. At this time, the first workpiece support portion 441 may be used.

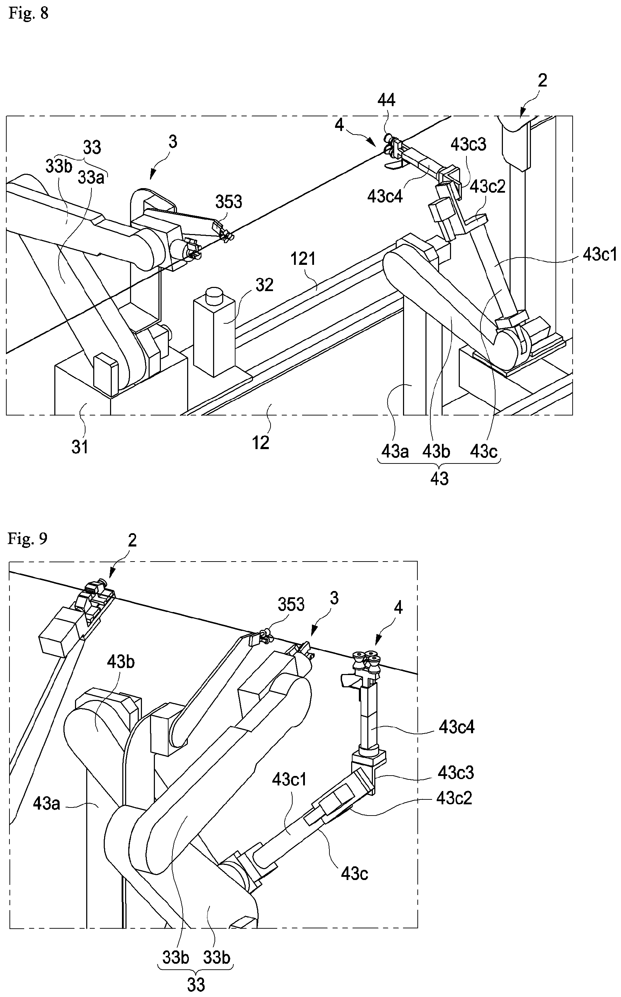

Referring to FIG. 8, when the feeding of the workpiece is completed, the bending unit 3 is activated. The workpiece is inserted into the bending head 34, and the bending unit 3 performs the bending operation. The bending operation of the workpiece may start from the end of the workpiece.

At this time, the auxiliary finger unit 35 may always support the unbent portion of the workpiece. The finger unit 4 may also be located closer to the chuck unit 2 than the bending unit 3 to support the workpiece.

At this time, the bending unit 3 performs the bending operation from the end of the workpiece and moves toward the chuck unit 2. Accordingly, the finger unit 4 may also move toward the chuck unit 2.

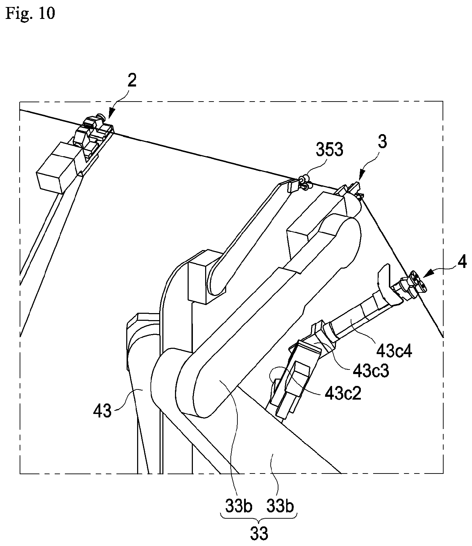

Referring to FIGS. 9 and 10, when a certain portion of the workpiece has been processed, the finger unit 4 opens the gripper 440 so that the first workpiece support portion 441 is moved away from the workpiece position and supports the already bent portion.

That is, when the bending unit 3 processes the workpiece by a predetermined length, the finger unit 4 may support the workpiece at a position farther from the chuck unit 2 in the extension direction of the workpiece than the bending unit 3.

In other words, when the workpiece has been processed by a predetermined length, the finger unit 4 may move to the processed portion of the workpiece to support it.

When the finger unit 4 moves to the processed portion of the workpiece and supports the workpiece, the workpiece may be positioned in the second workpiece support portion 442. Once the workpiece is seated in the second workpiece support portion 442, feeding of the workpiece is no longer possible, so the workpiece can be supported at a fixed position.

Therefore, even when the workpiece is very long, sagging can be prevented, and bending can be performed accurately.

Additionally, since the finger unit 4 moves from the unprocessed portion to the processed portion of the workpiece, the operation can proceed very close to the chuck unit 2, allowing efficient completion even when post-processing of the central part of the workpiece is required.

The finger unit 4 may continuously support the workpiece from the moment it supports the workpiece through the second workpiece support portion 442 until the processing is completed. At this time, the support position may be determined in consideration of the bending direction, bending speed, and length of the workpiece.

Since the finger unit 4 changes its support from the unprocessed to the processed portion of the workpiece, smooth operation can be ensured even when the finger unit guide 111 is shorter than the bending unit guide 121, and the overall length of the base can be prevented from becoming excessively large.

When the finger unit 4 supports the workpiece through the second workpiece support portion 442, it may maintain the support state and move even while the bending unit 3 continues its operation.

In this way, the bending operation of the bending unit 3 may proceed without interference from the finger unit 4.

The above describes exemplary embodiments of the present invention in detail. However, those of ordinary skill in the art to which the present invention pertains will understand that various modifications can be made to the above-described embodiments without departing from the scope of the present invention.

Therefore, the scope of rights of the present invention should not be limited to the described embodiments, but should be defined by the following claims and their equivalents.

## Claims

1. A bending machine for bending a workpiece, comprising:
a base;
a chuck unit provided on the base and configured to fix the position of the workpiece during processing;
a bending unit comprising an articulated robot provided on the base, configured to perform bending of the workpiece from both sides of the chuck unit, and movably disposed along a longitudinal direction of the base; and
a finger unit comprising an articulated robot provided on the base, configured to be movable along the longitudinal direction of the base and to support the workpiece,
wherein the bending unit performs bending while moving from an end of the workpiece toward the chuck unit, and
wherein the finger unit is configured to move to a processed portion of the workpiece after a predetermined length has been processed, to support the workpiece.

2. The bending machine according to claim 1,
wherein the finger unit is configured to be positioned at an unprocessed portion of the workpiece to support the workpiece when the workpiece has not yet been processed to a predetermined length.

3. The bending machine according to claim 2,
wherein the finger unit is configured to be movable in both a circumferential direction and a longitudinal direction of the workpiece when the workpiece has not yet been processed to a predetermined length,
and to be movable only in the circumferential direction of the workpiece after the predetermined length has been processed.

4. The bending machine according to claim 1,
wherein the finger unit is configured to continuously support the workpiece until processing of the workpiece is completed.

5. The bending machine according to claim 1,
wherein the chuck unit is disposed at a center of the base,
the bending units are respectively provided at one end and the other end of the base,
and the finger units are respectively provided at one end and the other end of the base.

6. The bending machine according to claim 5,
wherein the base comprises a bending unit guide configured to allow the bending unit to move in a longitudinal direction of the base, and a finger unit guide configured to allow the finger unit to move in the longitudinal direction of the base,
and wherein the bending unit guide is longer than the finger unit guide.

7. The bending machine according to claim 1,
wherein the number of rotational axes of the finger unit is equal to or greater than the number of rotational axes of the bending unit.

8. The apparatus of claim 5,
wherein the availability information comprises information for active time of the service data and information representing the recurrence of the service data.

9. The bending machine according to claim 8,
wherein the first workpiece support portion comprises a plurality of first rollers provided on a pair of gripper arms that are rotatably mounted at one end of the finger unit,
wherein the first rollers are shaped such that their cross-sectional area decreases toward the center,
and wherein, when the gripper arms are rotated to close, the workpiece is positioned and supported at the center side of the first rollers.

10. The bending machine according to claim 8,
wherein the second workpiece support portion comprises a plurality of second rollers respectively provided on one side and the other side of a pair of gripper arms that are rotatably mounted at one end of the finger unit,
wherein the second rollers are arranged in an alternating pattern to support the workpiece.
